Europäisches Patentamt

European Patent Office

Office européen des brevets

(11) Publication number: **0 222 757**
**B1**

(12) **EUROPEAN PATENT SPECIFICATION**

(45) Date of publication of patent specification: **03.05.89**

(21) Application number: **85903348.2**

(22) Date of filing: **16.07.85**

(86) International application number:
**PCT/GB85/00319**

(87) International publication number:
**WO 86/04127 17.07.86 Gazette 86/17**

(51) Int. Cl.⁴: **F 16 H 1/38**

(54) DIFFERENTIALS.

(30) Priority: **28.12.84 EP 84309128**

(43) Date of publication of application:
**27.05.87 Bulletin 87/22**

(45) Publication of the grant of the patent:
**03.05.89 Bulletin 89/18**

(84) Designated Contracting States:
**AT BE CH LI LU NL**

(56) References cited:
**GB-A- 124 563**
**GB-A- 512 770**
**GB-A- 681 604**
**GB-A-1 168 895**
**US-A-3 292 456**

(73) Proprietor: **KNIGHT-MECHADYNE LIMITED**
**Park Farm Estate**
**Kirtlington Oxon OX5 3JQ (GB)**

(72) Inventor: **KNIGHT, David, John**
**Hawthorne Cottage Loxwood**
**Billingshurst West Sussex RH14 OSF (GB)**

(74) Representative: **Hepworth, John Malcolm**
**J.M. Hepworth & Co. 36 Regent Place**
**Rugby Warwickshire CV21 2PN (GB)**

## Description

This invention relates to limited slip differentials for motor vehicles for use in a driving axle or between two driving axles.

Limited slip differentials incorporating reversible wormwheel drives are known, as described in US Patent Specification Nos. 2 559 916, 2 631 475, 2 859 641 and 4 191 071. Such differentials are of the "cross-axis planetary" type having co-axial output shafts each carrying a sun gear in the form of a worm-wheel meshing with an associated worm or set of worms. The axis of each worm is thus transverse to and displaced radially from the axis of the sun gears. These differentials have spur pinions which increase the radial bulk of the differential and also the correct positioning of the transverse worm assemblies presents manufacturing difficulties.

In GB—A—124 563 there is disclosed a differential gear assembly which does not specify worms and wheels and in which a double pair of differential gear wheels for meshing with a set of locking gears so as to form a continuous chain of gears around the driving axle. The double pair of differential gear wheels secure a balanced thrust on themselves and balance the radial thrust loads on the entire mechanisms.

However, in the present invention each of a first pair of diametrically opposed pinions is individually coupled to a single one of a second and similar pair of diametrically opposed pinions by means of an idler worm wheel so that two distinct parallel gear trains are formed between output sun gears. Thus, part of the torque difference between two output gears is provided by the thrust loads present in the assembly which therefore are thus used to induce a part of the locking action of the differential.

GB—A—512 770 discloses a differential gear mechanism which does not have a continuous helical formation for both the pinion portion and the worm portion of a worm member as in the differential gear mechanism of the present invention.

Indeed the equivalent gearing part of the mechanism shown and described in GB—A—512 770 provides separate helical gears of opposite hand which interconnect the output shaft and sun gears and moreover the helix angle of the worm and wheel gears do not permit the worm and wheel action to be reversible as in the present invention.

GB—A—512 770 requires two separate helical portions (18, 22 or 16, 20) of opposite hand and GB—A—681 604 has a helical gear (44) and, on the same shaft, a wholly separate spur gear 42 engaging the respective sun gear so that two wholly separate gear portions are provided as in GB—A—512 770.

According to the invention, there is provided a limited slip differential for a vehicle as specified in claim 1.

According to a feature of the invention, the idler worm wheels may be rotatably mounted on a common transverse pin with a spacer block therebetween.

An embodiment of the invention will now be described, by way of example, with reference to the accompanying drawings, in which:

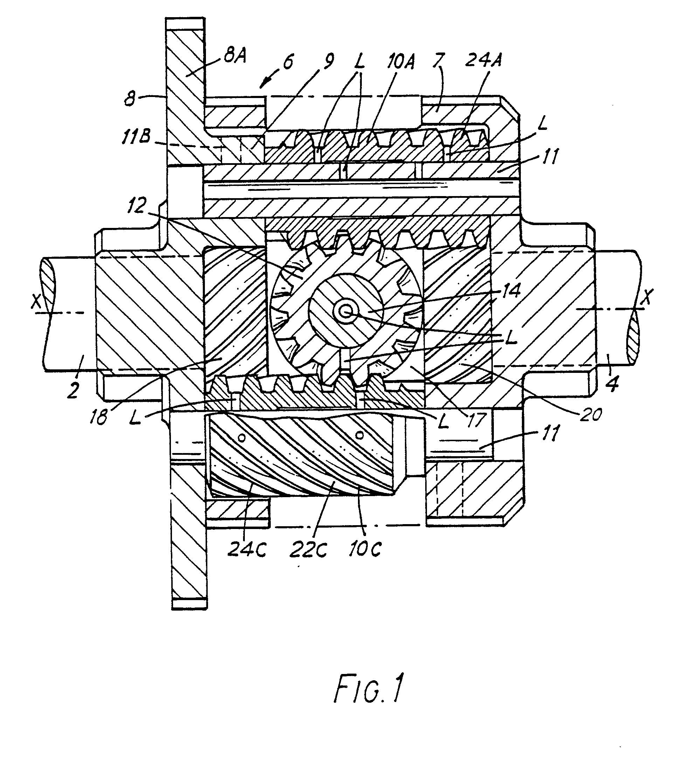

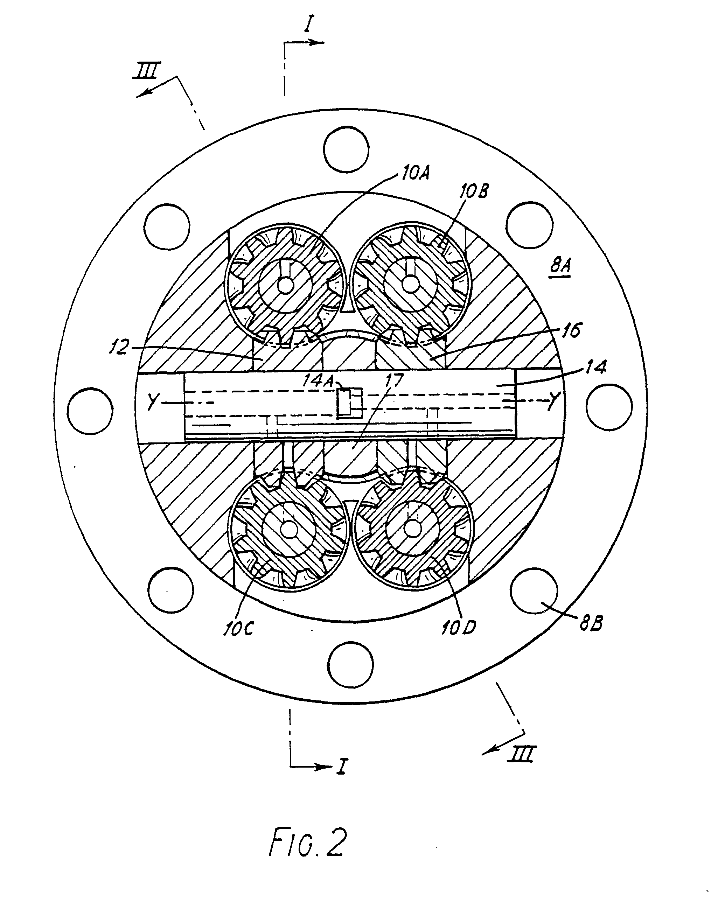

Figure 1 is a chordal sectional view of a differential according to the invention on the line I—I of Figure 2;

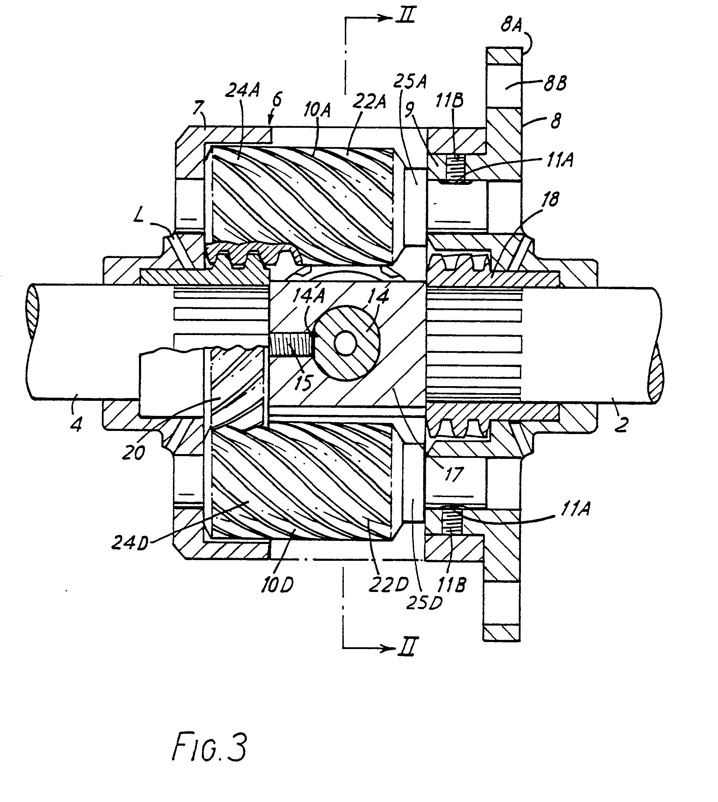

Figure 2 is a cross sectional view along the lines II of Figure 3; and

Figure 3 is an axial sectional view along the line III—III of Figure 2.

The differential shown in the drawings transmits drive from transfer gearing (not shown) to half-shafts 2 and 4 of a driven axle, for example of a motor car.

The differential has a gear carrier 6 formed by a bell-shaped housing 7 and a cover member 8 having a flange 8A and a hub portion 9 snugly engaged in the mouth of the housing 7. The flanges 8A may be formed with a ring of gear teeth or, as shown here, with a ring of holes 8B for bolts securing a bevel crown wheel or a transfer gear (not shown). The housing 7 and cover member 8 are secured together by suitable bolts or screws (not shown) to form the gear carrier 6.

Four worm members 10A—10D are rotatably mounted on hollow pins 11 supported in the gear carrier 6 at each of their ends. The worm members 10 and their pins 11 are parallel and equally spaced from the axis of the shafts 2 and 4. Each pin 11 is formed with a seating 11A for a grub screw 11B. Two of the worm members, 10A and 10C, mesh with a worm wheel 12 at diametrically opposed positions. The worm wheel 12 is located between the worm members 10A and 10C and is rotatably supported on a hollow support pin 14 mounted in the housing 7. The other two worm members, 10B and 10D, mesh with a further worm wheel 16 located between them, and also mounted on the support pin 14 but spaced along the support pin 14 by means of a spacer block 17. The pin 14 has a seating 14A for a securing grub screw 15 in the spacer block 17.

The worm wheels 12 and 16, the spacer block 17 and the support pin 14 are aligned on an axis YY which intersects the axis XX at right angles.

Half-shaft sun-gears 18 and 20 are respectively splined to (or formed integrally with) the inner ends of the half-shafts 2 and 4 and are aligned on the axis XX. Each half-shaft sun gear is within the gear carrier 6 and meshes with an extension one of the worm members of each pair of worm members meshing with a respective worm wheel. Thus, the half-shaft sun gear 18 meshes with worm members 10B and 10C which mesh respectively with worm wheels 16 and 12. The half-shaft sun gear 20 meshes with worm members 10A and 10D which mesh respectively with worm wheels 12 and 16.

Each worm member thus has a worm portion 22, having a helical thread and meshing with a worm wheel, and an extension forming a pinion portion 24 meshing with a half-shaft sun gear. The helix angle of the worm portions 22 and worm wheels 12 and 16 is such that the worm drive is reversible (in this case 43.1° to the axis, for the worms) i.e. operates bi-directionally. In this embodiment the half-shaft sun gears 18 and 20 and the pinion portions 24 of the worm members are helical, the pinion portion 24 being formed by continuations of the worm formation of the worm portions 22.

Each worm member also has a reduced-diameter untoothed portion 25 adjoining the worm portion to avoid engagement with the other half-shaft sun gear.

In operation, when the vehicle is travelling straight ahead with the road wheels turning at the same speed the gear carrier 6 is rotated about the axis XX. The rotary motion is transmitted to the half-shafts 2 and 4. The half-shafts, the gear carrier 6 and the gearing within the gear carrier rotate as a unit. There is no movement of the worms 10 or worm wheels 12, 16 about their axes.

When the vehicle corners, one half-shaft must rotate faster than the gear carrier 6 and the other half-shaft slower than the gear carrier. If the half-shaft 2 rotates faster than the gear carrier 6 it, through the half-shaft sun gear 18, causes the worms 10B and 10C to rotate about their axes in the gear carrier 6. The worms 10B and 10C in turn cause the worm wheels 16 and 12 to turn about the support pin 14. Because the worm drive is reversible, the worm wheels 16 and 12 cause the worms 10B and 10A to rotate in the opposite sense to worms 10B and 10C. Although the worm drive is reversible, drive is not transmitted with 100% efficiency from the worm wheels to the worm members. In this embodiment the efficiency is about 70%. As a result, there is frictional resistance to operation of the device and it functions as a limited slip differential. The rotation of the worm members 10D and 10A causes the sun gear 20 and the half-shaft 4 turn backwards relative to the carrier 6.

The steel worm members, worm wheels and spacer block must be robust and wear resistant and in this embodiment the worm wheels (and advantageously the worms and the spacer block especially where engine oil is the only available lubricant) can be case hardened and then receive anti-scuffing treatment such as 'No Scuff' available from British Heat Treatments Limited of Lowestoft.

The helix angle of the worms to the worm axis may be chosen to equal the angle of friction between the tyres and a wet road.

The housing 7 is formed with large openings 26 both to reduce mass and to assist the circulation of lubricating oil. Preferably, the lubricating oil is hypoid gear oil. Lubrication is ensured by oil passages L drilled in the various components.

The limited slip differential described above may be used to transmit drive to two further such differentials in the two driving axles (e.g. front and rear) of a four-wheel drive vehicle.

In a modification (not shown in the drawings), the grub screws 11B and seatings 11A are omitted and the untoothed portions 25 of the worms are replaced by flanges of corresponding diameter and axial length on the pins to provide axial location of the latter while allowing them to rotate.

If desired, further friction in the differential can be generated by axially biassing the worm members and/or one or both sun gears and/or the worm wheels, for example by means of Belleville washers located between the worm members and either the casing or the pin flanges (if used), between worm wheels and the casing, and/or one or both sun gears and the casing. Further friction may also be generated by the use of frusto-conical end surfaces on appropriate cones of the helically toothed members.

## Claims

1. A limited slip differential for a vehicle comprising:

a gear carrier (6) mountable for rotation about an axis (x-x) of the carrier;

a pair of diametrically opposed first worm members (10A, 10D) mounted for rotation relative to the carrier with their axis parallel to the carrier axis (x-x) and a similar pair of diametrically opposed second worm members (10B, 10C) mounted for rotation relative to the carrier with their axes parallel to the carrier axis (x-x); a first sun gear wheel (18) coaxial with the carrier axis and meshing with said first worm members, a second sun gear wheel (20) coaxial with the carrier and meshing with said second worm members, each worm member comprising a worm portion having a helical thread which meshes with an idler worm wheel (12, 16) and having a continuous tooth form extension forming a helical pinion portion meshing with a respective one of said first and second sun gear wheels (2), wherein the helix angle of the worm portions of each worm member and said worm wheels is such that the worm drive is reversible and wherein each of said first worm members is individually coupled to a single one of said second worm members by a respective one of said idler worm wheels.

2. A limited slip differential according to claim 1, further characterised in that said idler worm wheels are rotatably mounted on a common transverse pin (14) with a spacer block therebetween.

## Patentansprüche

1. Begrenztes Schlupfausgleichsgetriebe für ein Fahrzeug, gekennzeichnet dadurch, daß ein Getriebeträger (6) zur Rotation um eine Achse (x-x) des Trägers befestigbar ist; ein Paar sich diametral gegenüberliegender erster Schneckenglieder (10A, 10D) zur Rotation relativ zum Träger mit ihren Achsen parallel zur Trägerachse (x-x) angeordnet ist und ein ähnliches Paar sich diametral gegenüberliegender zweiter Schneckenglieder (10B, 10C) zur Rotation relativ zum Träger mit ihren Achsen parallel zur Trägerachse angeordnet ist; ein erstes Sonnenrad (18) koaxial zur Trägerachse angeordnet und in Eingriff mit den ersten Schneckengliedern ist, ein zweites Sonnenrad (20) koaxial zum Träger angeordnet und in Eingriff mit den zweiten Schneckengliedern ist, jedes Schneckenglied einen Schneckenabschnitt mit einem schraubenförmigen Gewinde aufweist, das mit einem Zwischenschneckenrad (12, 16) kämmt und mit einer kontinuierlichen Zahnflankenausdehnung, die einen schräg verzahnten Ritzelabschnitt bildet, der mit einem entsprechenden der ersten und zweiten Sonnenräder (20) kämmt, wobei der Steigungswinkel der Schneckenabschnitte jedes Schneckengliedes und der Schneckenräder derart ausgebildet ist, daß der Schneckenantrieb umkehrbar ist, und jedes der ersten Schneckenglieder individuell mit einem einzigen der zweiten Schneckenglieder durch jedes einzelne der Zwischenschneckenräder gekuppelt ist.

2. Begrenztes Schlupfausgleichsgetriebe nach Anspruch 1, dadruch gekennzeichnet, daß die Zwischenschneckenräder drehbeweglich auf einem gemeinsamen Querbolzen (14) mit einem dazwischen befindlichen Abstandshalterblock angeordnet sind.

**Revendications**

1. Différentiel à glissement limité caractérisé par la fait qu'il comprend un carter de différentiel (6) monté pour tourner sur lui-même autour de son axe (x-x); deux premiers éléments de vis sans fin (10A, 10D) diamétralement opposés, montés pour tourner par rapport au carter et ayant leurs axes parallèles à l'axe (x-x) de ce dernier; deux secondes éléments de vis sans fin (10B, 10C) diamétralement opposés, montés pour tourner par rapport au carter et ayant leurs axes parallèles à l'axe de ce dernier; un premier pignon planétaire (18) coaxial avec l'axe du carter et en prise avec les deux premiers éléments de vis sand fin (10A, 10D); un second pignon planétaire (20) coaxial avec l'axe du carter et en prise avec les deux seconds éléments de vis sans fin (10B, 10C), chaque élément de vis sans fin comportant une partie de filet hélicoïdal en prise avec un pignon de vis sans fin intermédiaire (12, 16) et ayant un prolongement en forme de dent continue constituant une partie de pignon hélicoïdal en prise respectivement avec le premier pignon planétaire (18) et le second pignon planètaire (20), l'angle d'hélice des parties de vis sans fin de chaque élément de vis sans fin en prise avec les pignons intermédiaires (12, 16) et celui de ces derniers pignons étant tel que le sens d'entrainement des vis sans fin est réversible et que chacun des premiers éléments de vis sans fin (10A, 10D) est couplé individuellement à un seul des seconds éléments de vis sans fin (10B, 10C) apr l'un des pignons de vis sans fin interemédiaire (12, 16) correspondant.

2. Différentiel selon la revendication 1, caractérisé par le fait que les pignons de vis sans fin intermèdiaires (12, 16) sont montés de manière rotative sur un axe transversal commun (14) avec une bague d'écartement (17) située entre eux.

FIG.1

1

FIG. 2

2

EP 0 222 757 B1

FIG.3